# EUROPÄISCHE PATENTSCHRIFT

(11) **EP 2 445 717 B1**
(45) Veröffentlichungstag und Bekanntmachung des Hinweises auf die Patenterteilung: **30.11.2016**
(21) Anmeldenummer: 10727723.8
(22) Anmeldetag: 23.06.2010
(51) Int. Cl.: B05D 5/00, B32B 37/15, B32B 37/20, B32B 33/00

(54) **VERFAHREN ZUR ERHÖHUNG DER RITZHÄRTE EINES KÖRPERS**
METHOD FOR INCREASING THE SCRATCH HARDNESS OF A BODY
PROCÉDÉ POUR AMÉLIORER LA DURETÉ À LA RAYURE D'UN CORPS

(30) Priorität: 26.06.2009 AT 9982009
(43) Veröffentlichungstag der Anmeldung: 02.05.2012
(73) Patentinhaber: Senoplast Klepsch & Co. GmbH, 5721 Piesendorf (AT)
(72) Erfinder: KAPPACHER, Johann, A-5721 Piesendorf (AT); OBERKOFLER, Manfred, A-5730 Mittersill (AT); LOOS, Christian, A-5671 Bruck / Glocknerstr. (AT); GRUGGER, Marco, A-5700 Zell am See (AT)
(74) Vertreter: Schwarz & Partner
(86) Internationale Anmeldenummer: PCT/EP2010/058926
(87) Internationale Veröffentlichungsnummer: WO 2010/149710

(56) Entgegenhaltungen:
- WO-A1-2008/002042

## Beschreibung

Die Erfindung betrifft ein Verfahren zur Erhöhung der Ritzhärte eines Körpers, der zumindest bereichsweise eine Oberfläche aus einem extrudierten oder coextrudierten Kunststoff aufweist, wobei eine die Ritzhärte erhöhende organische, fluororganische oder siliziumorganische Verbindung auf die Oberfläche des extrudierten oder koextrudierten Kunststoffs aufgebracht wird.

Kunststoffoberflächen finden in sehr vielen Alltagsbereichen - insbesondere auch in der Möbelindustrie - Einsatz. Dabei wird meistens auf ein Substrat, wie z.B. eine MDF-Platte, ein ein- oder mehrschichtiger Kunststoffkörper aufgebracht. Sehr häufig werden von Kunden hochglänzende und extrem glatte Oberflächen gewünscht.

Als verwendete Materialien mit diesen Eigenschaften können genannt werden: Glas oder beschichtete Folien mit unterschiedlichen Trägermaterialien (PET, PVC, PE, ABS etc.). Glas zeigt von den verwendeten Materialien die härteste Oberfläche und wäre preislich sehr wettbewerbsfähig, hat allerdings den Nachteil, dass es in der Verarbeitung schwierig zu handhaben ist. Beschichtete Folien sind in der Verarbeitung leichter zu handhaben, weisen aber auf Grund der Lackoberfläche eine unruhige Oberfläche ("Orange-Peel" Effekt) auf.

Extrudierte oder coextrudierte Kunststoffe z.B. mit einer Acryloberfläche, einer Polycarbonatoberfläche oder einer Polyesteroberfläche weisen die gewünschten optischen und haptischen Eigenschaften auf, d.h. sie können sehr leicht verarbeitet werden und zeigen eine hochglänzende und sehr glatte sowie ebenmäßige Oberfläche. Aufgrund der spiegelglatten aber thermoplastischen Oberfläche weisen sie allerdings den Nachteil auf, dass sie kratzempfindlich sind. Daher wird in der Praxis bei solchen Möbelteilen zunächst auf der Oberfläche eine Schutzfolie aufgebracht, die die empfindliche Oberfläche während des Aufbringens des Kunststoffkörpers auf das Substrat oder während des Transports des Möbelteils schützt. Diese wird in der Regel direkt "in-Line", d.h. während der Extrusion/Coextrusion auflaminiert und über die gesamte Prozesskette an der Oberfläche beibehalten. Erst beim Endkunden wird diese Schutzfolie abgezogen. Danach ist die Oberfläche besonders empfindlich gegen Kratzer, sodass Staubrückstände bereits bei der Reinigung mit Tüchern zu Kratzern in der Acryloberfläche führen können, was von den Kunden und Endkunden bemängelt wird.

Verfahren, welche Kunststoffoberflächen in ihrem tribologischen Verhalten verändern, sind aus der Literatur bekannt. So werden zum Beispiel Wachse, fluorierte organische Kohlenwasserstoffe oder siliziumorganische Verbindungen im Allgemeinen verwendet, um die gleitreibenden Eigenschaften zu reduzieren und damit die Kratzfestigkeit zu erhöhen.

Um die Oberfläche kratzfester zu machen, wäre es denkbar, diese zu polieren oder mit einem Versiegelungsmaterial zu versehen. Diese beiden Varianten zeigen folgende Nachteile:
1. Der Auftrag und das Einpolieren von Polier- oder Versiegelungsmittel führt an der sensiblen Oberfläche zu optischen Beeinträchtigungen.
2. Um das Polier- oder Versiegelungsmittel wieder zu entfernen, müssen Reste, welche an der Oberfläche kleben, mittels Polierscheiben, welche in der Regel aus sehr weichen Fasern bestehen, wieder abgetragen werden. Diese verursachen in Kombination mit den Feinstäuben des Poliermittels Oberflächenbeeinträchtigungen (sog. Mikrokratzer).
3. Weiters kommt es wegen der eingesetzten Scheuermittel zu einer enormen Staubbelastung, die weder bei der Möbelfolienherstellung noch beim Endkunden gewünscht wäre.

Daher ist man dazu übergegangen - wie beispielsweise in der WO 2006/005090A1 vorgeschlagen - bestimmte siliziumorganischer Verbindungen in die Acryloberfläche einzuarbeiten. Dies führte dazu, dass die Oberflächeneigenschaften verbessert wurden. Allerdings hat sich herausgestellt, dass die zugesetzten siliziumorganischen Verbindungen nur bedingt temperaturstabil sind und bei der Coextrusion oder Extrusion der Acryloberfläche teilweise zersetzen, sodass unerwünschte optische Beeinträchtigungen beobachtet werden können.

In der DE 101 00 383 A1 werden PMMA Oberflächen in mehrstufigen Prozessen chemisch modifiziert, indem fluororganische Verbindungen kovalent an die PMMA Oberfläche gebunden werden, um so eine verbesserte Kratzfestigkeit zu erzielen. Dieses Verfahren hat zwar den Vorteil, dass durch die kovalente Bindung eine sehr dauerhafte Modifikation der Oberfläche erfolgt, aber auch den Nachteil, dass der Aufwand in der Prozessführung sehr groß ist.

Aus der KR 10-2005-0027581 ist ein Verfahren bekannt, das dem Oberbegriff des Anspruchs 1 entspricht.

Aufgabe der vorliegenden Erfindung ist es daher, für die oben beschriebenen Probleme Abhilfe zu schaffen und ein Verfahren der vorgenannten

Art bereitzustellen, bei dem diese Probleme vermindert sind.

Bei einem Verfahren der eingangs genannten Art wird diese Aufgabe gelöst, indem die organische, fluororganische oder siliziumorganische Verbindung mittels eines flächigen Transfermediums, auf welchem die organische, fluororganische oder siliziumorganische Verbindung angeordnet ist, in-Line im laufenden Extrusionsprozess auf die Oberfläche des extrudierten oder coextrudierten Kunststoffs aufgebracht und übertragen wird. Die Verbindung hat die Eigenschaft, die Ritzhärte und/oder Kratzfestigkeit der Oberfläche zu erhöhen.

Bei einem Körper mit einer Oberfläche, die zumindest bereichsweise einen extrudierten oder coextrudierten Kunststoff umfasst, wobei auf einer Oberfläche des Kunststoffs ein flächiges Transfermedium angeordnet ist und vorzugsweise mit einem wenigstens einschichtigen Kunststoffträger, wird die Aufgabe gelöst, indem auf der der Oberfläche zugewandten Seite eine übertragbare organische, fluororganische oder siliziumorganische Verbindung angeordnet ist, wobei die organische, fluororganische oder siliziumorganische Verbindung die Kratzfestigkeit und/oder die Ritzhärte der Oberfläche des Kunststoffs erhöht.

Die Erfindung beruht auf der Erkenntnis, dass man noch während der Herstellung des Körpers auf die Oberfläche des Kunststoffs die organische, fluororganische oder siliziumorganische Verbindung mit einem flächigen Transfermedium aufbringt (auf welches die organische, fluororganische oder siliziumorganische Verbindung in einem vorangegangenen Schritt aufgebracht wurde) und diese Verbindung vom flächigen Transfermedium auf die Oberfläche übertragen wird. Im Unterschied zu bekannten Verfahren, wo die gewünschte Verbindung durch Druck oder Beschichtung auf die Oberfläche aufgebracht wird, ist im Rahmen der Erfindung ein Transferverfahren vorgesehen. Bei der organischen, fluororganischen oder siliziumorganischen Verbindung handelt es sich um eine Verbindung, welche Oberflächeneigenschaften, wie Oberflächenhärte verbessert, d.h. erhöht und/oder die Gleitreibung senkt.

Bevorzugt ist vorgesehen, dass die Oberfläche Kunststoff ausgewählt aus der Gruppe der Acrylpolymere, Polycarbonate, Polyester oder Blends davon umfasst.

Die genannte Vorgangsweise bringt folgende Vorteile:
1. Es hat sich erstaunlicherweise herausgestellt, dass die Übertragung der Verbindung mittels eines Transfermediums auf die Oberfläche des Kunststoffs zu keinen negativen Beeinträchtigungen der optischen Oberflächenqualität führt.
2. Auf diese Art kann das Aufbringen der gewünschten Verbindung einerseits bereits vor der Lieferung an den Möbelhersteller oder den Endkunden erfolgen. Die Applikation erfolgt "in-Line" im laufenden Extrusionsprozess.
3. Andererseits kann vermieden werden, dass die organische, fluororganische oder siliziumorganische Verbindung auf die Oberfläche in flüssigem Zustand aufgetragen werden muss, sodass diese die Unterseite des Kunststoffkörpers kontaminiert.
4. Es ist nicht zwangsläufig erforderlich im Prozess mit flüssigen organischen Substanzen und Lösungsmitteln zu arbeiten, die Transfermedien können "ex-Line" aber auch "in-Line" zur Extrusion dargestellt werden. (Zur Erläuterung bedeutet in-Line, dass eine Prozesskette vorgesehen ist, und die einzelnen Verfahrensschritte innerhalb einer Prozesskette erfolgen, d.h. nicht räumlich und zeitlich getrennt stattfinden, während ex-Line bedeutet, dass nicht eine einzige Prozesskette vorgesehen ist, sondern einzelne Verfahrensschritte räumlich und zeitlich voneinander getrennt statt finden.) Verwendet man als Transfermedium ein vorbeschichtetes Papier, so kann dies "in-line" im Extrusionsprozess eingesetzt werden, die Beschichtung des Papiers erfolgt "ex-line", sodass allfällige Lösungsmittel nicht in den Extrusionsprozess gelangen, wie weiter unten anhand der Figuren noch ausführlicher erläutert werden wird.

Im Rahmen der Erfindung haben sich Trägermedien als vorteilhaft erwiesen, die einen folienartigen Träger und eine darauf angeordnete, transferierbare organische, fluororganische oder siliziumorganische Verbindung aufweisen. Als folienartig ist im Rahmen der Offenbarung z.B. ein dünnes Blatt bzw. ein Körper, der eine große Ausdehnung in zwei Dimensionen und im Vergleich dazu eine deutlich geringere Ausdehnung in der dritten Dimension aufweist. Ein folienartiger Körper ist außerdem aufwickel- bzw. aufrollbar. Im Gegensatz zu einem folienartigen Körper stehen dickere Materialien, die nicht mehr aufgerollt werden können und folglich als Tafel bezeichnet werden. Typischerweise sind folienartige Körper wenige Millimeter dick, vorzugsweise unter 1 Millimeter dick. Das Trägermedium ist im bevorzugten Fall zumindest so groß, dass die gesamte Oberfläche des Kunststoffs damit bedeckbar ist bzw. die gesamte Oberfläche abdeckt.

In einer ersten Ausführungsvariante kann vorgesehen sein, dass das folienartige Trägermedium Papier, vorzugsweise einen Papierverbundstoff umfasst.

Als Papiere eignen sich jene, die die organische, fluororganische oder siliziumorganische Verbindung auf die Oberfläche des Kunststoffs transferieren können. Dabei können Papierverbunde mehrschichtig aufgebaut sein. Eine Papierschicht kann dabei auf einer Seite wenigstens eine Kunststoffschicht aufweisen, wobei auf der Kunststoffschicht die übertragbare organische, fluororganische oder siliziumorganische Verbindung angeordnet ist. Auf der Papierschicht kann allerdings auch eine Kunststoffschicht angeordnet sein, in die die organische, fluororganische oder siliziumorganische Verbindung integriert ist. Die Papierschicht kann auch auf der zweiten Seite wenigstens eine Kunststoffschicht aufweisen. Als Kunststoffe haben sich Duroplasten, Thermoplasten, Elastomere oder Silikone im Rahmen der Erfindung als vorteilhaft erwiesen. Besonders bevorzugt handelt es sich um vernetzte Siliziumorganopolymere.

In einer zweiten Ausführungsvariante kann vorgesehen sein, dass das folienartige Trägermedium aus wenigstens einer Kunststoffschicht aufgebaut ist. Auch mehrschichtige Trägermedien sind möglich, wobei sich auch hier Kunststoffe wie Duroplasten, Thermoplasten, Elastomere oder Silikone im Rahmen der Erfindung als vorteilhaft erwiesen haben. Besonders bevorzugt handelt es sich um thermoplastische Kunststoffe auf Polyolefinbasis, wie z.B. Polypropylen oder Polyethylen.

Bevorzugt ist das Transfermedium eine Transferfolie. Das Transfermedium kann auf der Acryloberseite belassen werden, insbesondere bis zur Lieferung an den Kunden. Für das Aufbringen der organischen, fluororganischen oder siliziumorganischen Verbindung kann das Transfermedium, vorzugsweise die Transferfolie, gleichzeitig als Schutzfolie ausgebildet sein. So kann gleichzeitig in einem Verfahrensschritt mit dem Aufbringen der organischen, fluororganischen oder siliziumorganischen Verbindung auch noch die vorzugsweise abziehbare Schutzfolie auf die Oberfläche aufgebracht werden. Die Schutzfolie kann aufkaschiert werden bzw. als abziehbare Kaschierfolie ausgebildet sein. Das Aufbringen der organischen, fluororganischen oder siliziumorganischen Verbindungen erfolgt "in-Line" zum Extrusionsprozess.

Die Schutzfolie kann, wie an sich bekannt, beispielsweise aus einem Thermoplasten bestehen. Bevorzugte Materialien sind Polyolefine, wie Polyethylen und Polypropylen. Polyesterverbindungen, wie z.B. BOPET (biaxiallyoriented polyethylenterepthalate) können aber auch zum Einsatz kommen. Zusätzlich kann das Transfermedium bzw. die Schutzfolie einen Kleber aufweisen. Der Kleber kann dabei als eigenständige Schicht am Transfermedium oder an der Schutzfolie angeordnet sein. Bevorzugt ist vorgesehen, dass die organische, fluororganische oder siliziumorganische Verbindung am Kleber angeordnet ist oder in die Kleberschicht integriert ist. Als Kleber können wie an sich für Folien bekannt beispielsweise Klebstoffe auf Acrylatbasis, Polymermischungen, die Acrylate enthalten oder EVA bzw. polymere Mischungen, die EVA (Ethylenvinylacetat) enthalten, Einsatz finden.

Alternativ dazu kann vorgesehen sein, dass das Transfermedium unmittelbar anschließend abgezogen wird. In diesem Fall wird zum Schutz der Oberfläche des Kunststoffs anschließend noch eine abziehbare Schutzfolie auflaminiert welche unter Umständen bis zum Aufbau des fertigen Möbelstückes an der Oberfläche belassen wird.

Für das Verfahren, den Verbundkörper und auch das Möbelteil sind in vorteilhaften Ausführungen vorgesehen, dass das Polymer ein Acrylpolymer wie ein Polyacrylat, vorzugsweise PMMA oder schlagzähmodifiziertes PMMA (HI-PMMA) umfasst, vorzugsweise als solches ausgebildet ist. Ergänzend kann die Oberfläche vor dem Auftrag der organischen, fluororganischen oder siliziumorganischen Verbindung noch mittels Corona- oder eines Plasmas vorbehandelt werden.

Im Rahmen der Erfindung können die organischen, fluororganischen oder siliziumorganischen Verbindungen auf physikalischem oder chemischem Weg an die Oberfläche des extrudierten oder coextrudierten Kunststoffs angebracht werden. Das Zuvor Gesagte gilt gleichermaßen für physikalische und chemische Übertragung. Allerdings unterscheiden sich die aufgebrachten Verbindungen in chemischer Sicht. Für die "physikalischen" Varianten sind beispielsweise Wachse, fluorierte Kohlenwasserstoffe oder siliziumorganische Verbindungen, wie aus der WO 2006/005090A1 bekannt, einsetzbar. Bevorzugte Ausführungsbeispiele umfassen PDMS (Polydimethylsiloxan) als siliziumorganische, PTFE (Polytetrafluorethylen) als fluororganische oder Wachse als organische Verbindung.

Die Verbesserung der Oberflächeneigenschaften einer Acryloberfläche ist in der folgenden Tabelle erläutert. Dabei wurden die jeweils angeführten Verbindungen auf die PMMA-Oberfläche eines PMMA-ABS Coextrudat-Kunststoffkörpers aufgebracht (Bezeichnung der Anmelderin SENOSAN® AM 1500X):

| Beschichtung | Optisch (subjektiv) | Mikroritzhärte (der Oberfläche nach: ISO 4586-2.14) [N] | Gleitwinkel PMMA [Grad] | Oberflächenspannung (mit Corona-Prüftinte) [mN/m] |
|---|---|---|---|---|
| keine | 1 | 0,3 | 32° | >35, <38 |
| siliziumorganisch | 1 | 0,8 | 19° | >22, <24 |
| fluororganisch | 2 | 0,9 | 12° | >26, <32 |
| organisch | 5 | 0,9 | 11° | >32, <35 |

### (Optische Beurteilung: 1 = sehr sauber (ideal) bis 5 = unzureichend (unerwünscht))

Folgende Verbindungen wurden unter anderem getestet und seien als Beispiele angeführt:
- Siliziumorganisch:: PDMS (Polydimethylsiloxan) - Beschichtung, Silikonöl der Fa. Wacker Chemie, Serie AK100
- Fluororganisch:: PTFE (Polytetrafluorethylen) Trenn- und Gleitmittel (Polytetrafluorethylen)
- Organisch:: BYK® Wachs (Ceracol® 609N, wachsmodifizierte Lanolindispersion)

Zur Prüfung der Gleitwinkel ist zu ergänzen, dass hierfür ein motorisch verstellbarer Schwenktisch verwendet wird. Auf diesen Tisch wird die zu prüfende Kunststoffplatte gelegt und darauf das Prüfgewicht, welches aus einem Metallquader beseht. Dieser ist einseitig mit einer ABS-Platte verklebt worden (Auflagefläche: 63 x 63 cm / Gesamtgewicht: 500 g). Die Prüfung beginnt bei 0 Grad Gleitwinkel und der verstellbare Auflagetisch wird nun bis zum ersten Abrutschen des Prüfgewichts hochgefahren. Danach wird der Gleitwinkel an der seitlichen Skalierung abgelesen. Prüfung erfolgt 3 x pro Probe an unterschiedlichen Stellen.

Zur Prüfung der Oberflächenspannung ist zu ergänzen, dass hierfür Corona-Prüftinten mit unterschiedlich definierten Oberflächenspannungen verwendet wurden (Fa. ARCOTEC GmbH). Besitzt die Prüftinte eine geringere Oberflächenspannung als die zu prüfende Kunststoffoberfläche, breitet sich die Flüssigkeit gleichmäßig aus. Wenn die Oberflächenspannung der Prüftinte jedoch gleich oder höher als die Kunststoffoberfläche ist, dann zieht sich die Flüssigkeit zusammen und neigt zur Tröpfchenbildung.

Die Ritzhärte bzw. Mikroritzhärte wird nach ISO 4586-2.14 ermittelt. Aus dem Erzeugnis werden 3 Probekörper 100 x 100 mm geschnitten. Im Schnittpunkt der Diagonale wird ein Loch mit 6,5 mm Durchmesser gebohrt. Die zu prüfenden Oberflächen werden mit einem die Probekörper nicht angreifenden Mittel z. B. Spiritus und einem weichen Lappen gereinigt und für 24 h unter Normalbedingungen gelagert. Das Prinzip des Scratchtests, auch Ritztest genannt, besteht darin, dass eine gewichtsbelastete Spitze eines Diamanten (Winkel 90°, Spitzenradius 90 µm) über die Schicht gezogen wird. Mit einem Universal Scratch Tester (Model 413) wird die Messung vorgenommen. Zum Justieren des Gewichtsarms werden eines der Gewichte sowie das Gegengewicht mit integrierter Libelle benötigt. Das Gewicht wird in der Weise auf den Skalenarm aufgesetzt, dass die Rändelschraube zum Arretieren des Gewichts nach vorne zeigt. Dann wird es auf dem Skalenarm so weit nach rechts (zum Drehpunkt) geschoben, bis die linke Seite (mit Markierung) mit dem Skalenwert "0" bündig. ist. Das Gegengewicht wird anschließend rechts vom Drehpunkt (und des Belastungsgewichtes) aufgesetzt und soweit verschoben, bis sich der Arm nach frei schwebendem Pendeln in der waagerechten Position befindet (Kontrolle durch die Libelle). Durch Anziehen der Rändelschraube wird das Gegengewicht auf dieser Position arretiert. Der Skalenarm mit dem Prüfwerkzeug und dem zu verwendenden Gewicht befindet sich jetzt im Gleichgewicht. Die Probe wird mittig auf einen Probenteller platziert. Durch vorsichtiges Drehen der Rändelmutter im Uhrzeigersinn wird die Probetafel durch das Druckstück fest eingespannt. Der Skalenarm ist durch die Rändelmutter in der Höhe verstellbar, damit sichergestellt ist, dass die Oberseite des Armes stets waagerecht verläuft. Das Gewicht wird auf dem Skalenarm auf den Wert 0,1 geschoben, damit die eingespannte Probe geringfügig belastet wird. Die horizontale Lage des Skalenarms ist mit der im Gegengewicht befindlichen Libelle genau festzustellen und kann durch Heben bzw. Senken der Achse mit Hilfe der Rändelmutter korrigiert werden. Je nach Wahl des Gewichts kann eine Maximalkraft von 1 N bzw. 10 N zur Wirkung kommen. Jeder Teilstrich auf dem Skalenarm entspricht dabei einer Gewichtskraft von 0,01 N bzw. 0,1 N. Die vorgeschriebene Belastung wird durch Verschieben des Gewichts erreicht. Der Probenteller wird mit einer Geschwindigkeit von 5 U/min einmal um seine Achse rotiert. Als Maß für die Ritzhärte des geprüften Werkstoffes gilt die geringste Gewichtskraft, die eine in sich geschlossene Markierung auf dem Probekörper hinterlässt, d.h. sind bei der ersten Belastung bereits starke Spuren zu sehen, muss die Belastung schrittweise herabgesetzt werden. Sind keine Spuren zu erkennen, muss die Belastung schrittweise erhöht werden. Um eine statistische Aussage zu erhalten, werden drei Probetafeln getestet. Zunächst wird die beanspruchte Oberfläche mit einem den Probekörper nicht angreifenden Lösungsmittel (zB Ethanol) und einem weichen Tuch gereinigt. Der Probekörper wird dann mit der Beobachtungsschablone abgedeckt auf dem drehbaren Tisch der Betrachtungsvorrichtung befestigt und mit freiem Auge im Beobachtungsabstand von 400 mm auf bleibende Markierungen untersucht. Diese müssen in allen Segmenten der Beobachtungsschablone durchgehend sichtbar sein. Die Schablone kann im Zweifelsfall zusätzlich auf dem Probekörper bewegt werden. Eine Markierung wird als bleibend angesehen, wenn sie 24 h nach der Prüfung noch erkennbar ist (Lagerung im Normalklima). Dazu ist es notwendig, den Probekörper in der Beobachtungsvorrichtung auf dem drehbaren Tisch so zu schwenken, dass er unter allen Einfallswinkeln des Lichts beurteilt werden kann. Als Maß für das Verhalten bei Kratzbeanspruchung gilt die geringste Gewichtskraft, die noch eine in sich geschlossene Markierung auf allen 3 Probekörpern hervorgerufen hat.

Vor dem Aufbringen der jeweiligen Verbindung kann die Oberfläche des Kunststoffs mit Korona vorbehandelt werden.

Bei chemischer Oberflächenmodifikation wird die organische, fluororganische oder siliziumorganische Verbindung kovalent an die Oberfläche des Kunststoffs, d.h., an einen reaktiven Rest der Acrylverbindung gebunden. Zu diesem Zweck ist unter Umständen eine Aktivierung der Oberfläche erforderlich. Diese kann z.B. durch Elektronenbeschuss, Plasma- oder Koronavorbehandlung erzielt werden. Als reaktive Verbindungen zum Aufbringen kommen beispielsweise Siloxane mit Doppelbindungen in Frage. Die Reaktion kann als Radialreaktion erfolgen. Als mögliche Verbindungen und für die genauen Verfahrensbedingungen sei an dieser Stelle auf die DE 101 00 383 A1 verwiesen.

Weitere Details und Vorteile der Erfindung ergeben sich aus den nachfolgenden Figuren und Figurenbeschreibungen. Dabei zeigt
- Fig. 1: eine Ausführungsvariante des erfindungsgemäßen Verfahrens zur Herstellung eines Körpers,
- Fig. 2: die Variante gemäß Fig. 1 mit dem Coextrusionsschritt,
- Fig. 3: die Variante gemäß Fig. 1 mit einem vorab hergestellten Coextrudat,
- Fig. 4: eine zweite Ausführungsvariante für ein erfindungsgemäßes Verfahrens zur Herstellung eines Körpers unter Verwendung eines Transfermediums mit nachfolgender Lamination einer Schutzfolie,
- Fig. 5: die Variante gemäß Fig. 4 mit dem Coextrusionsschritt,
- Fig. 6: die Variante der Fig. 4 mit einem vorab hergestellten Coextrudat,
- Fig. 7: ein mehrschichtiges Transfermedium und
- Fig. 8: ein Möbelteil.

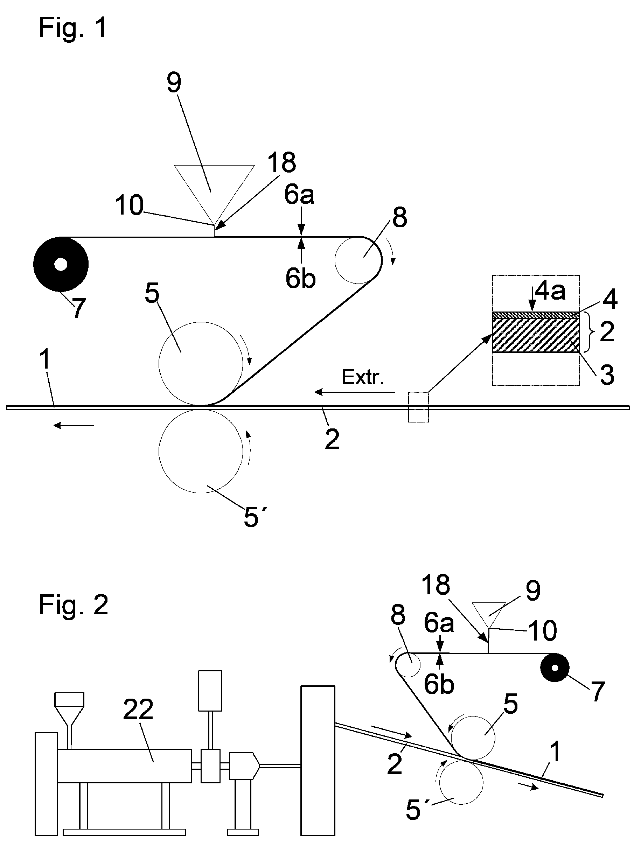

In der Fig. 1 ist schematisch ein Verfahrensschritt zur Herstellung eines erfindungsgemäßen Körpers 1 gezeigt. Zunächst wird ein Kunststoff 4 wie z.B. ein Acrylpolymer, und zwar PMMA mit einem coextrudierbaren Kunststoffträger 3, wie ABS nach bekannter Art coextrudiert, sodass ein zumindest zweischichtiger Rohkunststoffkörper 2 erzeugt wird. Auch andere Thermoplaste, welche in der Coextrusion mit PMMA denkbar wären, können zum Einsatz kommen. Der Körper 1 könnte aber auch noch weitere Schichten aufweisen. Z.B. könnte der Körper ein Mehrschichtcoextrudat mit drei oder mehreren coextrudierten Schichten sein. Im Ausschnitt der Fig. 1 ist dieser Rohkunststoffkörper 2 vergrößert dargestellt. Da der Coextrusionsschritt bereits bekannt ist, wurde darauf verzichtet, diesen in Fig. 1 abzubilden. Das erhaltene Coextrudat (Rohkunststoffkörper 2) bildet eine Bahn, die zu zwei Kalanderwalzen 5, 5' verläuft. Der Rohkunststoffkörper 2 weist einen einschichtigen Kunststoffträger 3 aus ABS (auch hier kann der Kunststoffträger 3 mehrschichtig ausgebildet sein) und eine Deckschicht 4 enthaltend ein Acrylpolymer auf (z.B. PMMA). Der Rohkunststoffkörper 2 wird durch die Kalanderwalzen 5, 5' in der Bildebene nach links bewegt. Auf den Rohkunststoffkörper 2 wird eine Schutzfolie 6 mittels der Kalanderwalzen 5, 5' aufkaschiert. Die abziehbare Schutzfolie 6 dient dazu die Oberfläche 4a der Acryldeckschicht 4 bzw. des Acrylpolymers zu schützen. Die Schutzfolie 6 liegt dabei aufgerollt auf einer Rolle 7 vor, wird abgerollt und über eine Umlenkrolle 8 zur oberen Kalanderwalze 5 gelenkt, die die Schutzfolie 6 auf die den Rohkunststoffkörper 2 aufkaschiert. Aus einem Behälter 9 mit einem Schlitz 10 wird nunmehr die organische, fluororganische oder siliziumorganische Verbindung auf die Oberfläche 6a der Schutzfolie 6 aufgebracht. So kann die organische, fluororganische oder siliziumorganische Verbindung 18 über die Schutzfolie 6 direkt auf die Acryloberfläche 4a aufgebracht werden. Die Schutzfolie 6 dient also nicht nur dem Schutz des Rohkunststoffkörpers 2, sondern übernimmt auch noch die Funktion des Transfermediums bzw. der Transferfolie.

In der Fig. 2 ist eine Variante des Prozesses von Fig. 1 noch einmal detaillierter erläutert, wobei der Coextrusionsschritt verdeutlicht wird. Die Coextrusionsanlage 22 coextrudiert PMMA 4 mit ABS 3 zum Rohkunststoffkörper 2, der dann die übrigen unter Fig. 1 erläuterten Verfahrensschritte durchläuft.

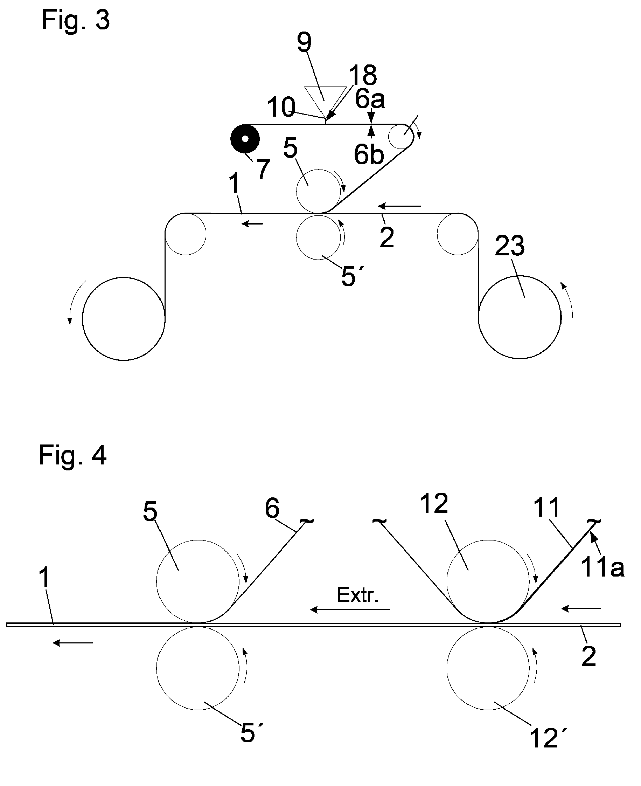

In der. Fig. 3 ist eine zweite Variante des Prozesses von Fig. 1 gezeigt. Anstelle einer Coextrusion von PMMA und ABS während des Aufbringungsvorgangs der Verbindung 18 liegt hier der Rohkunststoffkörper 2 in Form einer Rolle 23 vor. Der Rohkunststoffkörper 2 wird von der Rolle 23 abgezogen und dann den restlichen Verfahrensschritten von Fig. 1 unterzogen.

In der Fig. 4 ist eine alternative Ausführungsvariante vorgesehen, wo die organische, fluororganische oder siliziumorganische Verbindung 18 nicht über die Schutzfolie 6 sondern über eine Transferfolie in der Form eines beschichteten Papiers 11 aufgebracht wird. Dabei wird zunächst (ebenfalls wie an sich bekannt) ein Coextrudat 2 aus PMMA und ABS hergestellt, das durch die Kalanderwalzen 12, 12' verläuft. Ein flächiges Transfermedium 11 (hier beschichtetes Papier), das an der Oberfläche 11a die organische, fluororganische oder siliziumorganische Verbindung trägt, wird mittels der Kalanderwalze 12 auf die Oberfläche gedrückt und überträgt durch den Druck der Kalanderwalzen 12, 12' die organische, fluororganische oder siliziumorganische Verbindung. Das Transfermedium 11 bzw. das beschichtete Papier kann vorbereitet werden und auf einer Rolle (nicht gezeigt) gelagert sein. Es kann so die Aufbringung der organischen, fluororganischen oder siliziumorganischen Verbindung 18 auf die Transferfolie von der Aufbringung der organischen, fluororganischen oder siliziumorganischen Verbindung 18 auf die Acryloberfläche 4a abgekoppelt werden. Anschließend wird mit einer zweiten Kalanderwalzeneinheit 5, 5' eine abziehbare Schutzfolie 6 aufgebracht, um den Kunststoffkörper 1 zu schützen. Es wäre aber auch möglich das Papier in Line zu beschichten und so nur als Reversmedium zu verwenden.

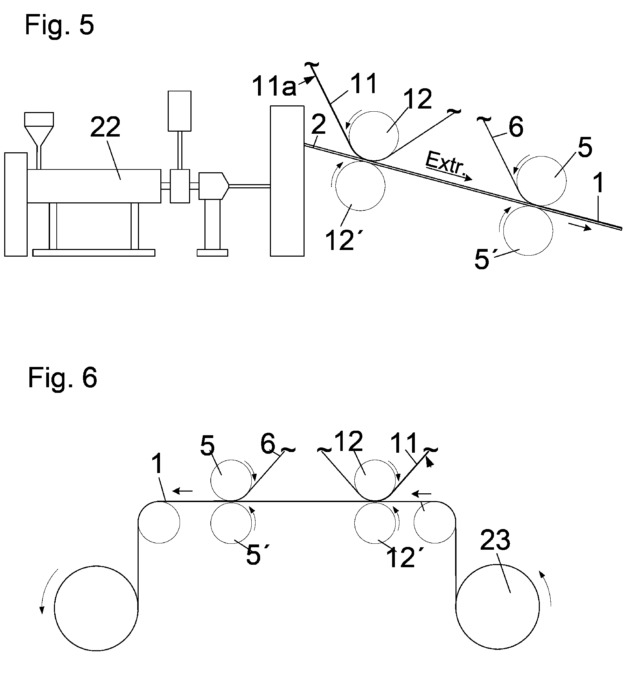

Die Ausführungsvariante der Fig. 5 zeigt das Verfahren gemäß Fig. 4 mit den vorangehenden Extrusionsschritten. In der Coextrusionsanlage 22 werden PMMA und ABS zum Rohkunststoffkörper 2 coextrudiert, der anschließend dem unter Fig. 4 beschriebenen Verfahren unterzogen wird.

In der Fig. 6 ist eine Alternative zur Variante der Fig. 5 gezeigt, wo der Rohkunststoffkörper 2 bereits in einem vorangegangenem Schritt erzeugt und auf einer Rolle 23 zwischengelagert wurde. Die anschließenden Schritte ergeben sich aus Fig. 4.

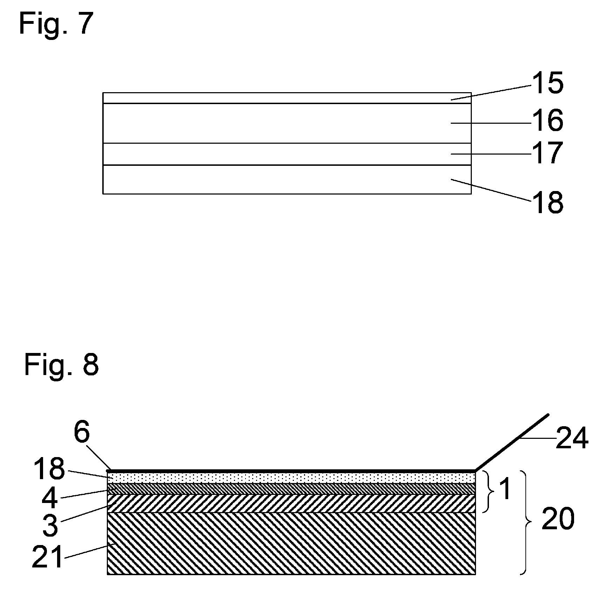

Eine nicht gezeigte Alternative wäre die Kombination der Maßnahmen der vorangegangenen Figuren. Beispielsweise könnte die Schutzfolie 6 mit der organischen, fluororganischen oder siliziumorganischen Verbindung 18 in einem vorangegangenen Schritt versehen werden. Anschließend könnte die Schutzfolie 6 aufgewickelt, zwischengelagert und erst zu einem späteren Zeitpunkt auf den Rohkunststoffkörper 2 aufgebracht werden. Vorteil dieser Variante ist die totale Entkoppelung der Aufbringung der organischen, fluororganischen oder siliziumorganischen Verbindung 18 auf das Transfermedium vom restlichen Herstellungsvorgang. Nachteilig an dieser Variante ist allerdings die Tatsache, dass die Verbindung 18 so auch mit der Unterseite 6b der Schutzfolie in Berührung kommt. Theoretisch könnte auch das Transfermedium 11 der Fig. 4 "in-Line" (wie in Fig. 1) mit der organischen, siliziumorganischen oder fluororganischen Verbindung versehen werden. In der Fig. 7 ist schematisch ein Transfermedium 11 bzw. eine Transferfolie 11, wie es im Beispiel der Fig. 4 bis 6 zum Einsatz kommen könnte, gezeigt. Dieses weist eine thermoplastische Oberflächenschicht 15 aus Polyethylen, anschließend eine Papierschicht 16 und schließlich eine weitere Polymerschicht 17, beispielsweise aus vernetztem Siliziumorganopolymer auf. Auf die Polymerschicht 17 ist eine organische, fluororganische oder siliziumorganische Verbindung 18 aufgebracht.

In der Fig. 8 ist ein fertiges Möbelteil 20 gezeigt. Dieses weist ein Substrat 21 auf, auf das der Verbundkörper 1 aufgebracht ist. Der Verbundkörper 1 besteht aus einem einschichtigen Kunststoffträger 3 aus ABS, einer Deckschicht 4 aus einem Acrylpolymer, und zwar PMMA und einer darauf angeordneten abziehbaren Schutzfolie 6. Eine Lasche 24 deutet die Abziehbarkeit der Schutzfolie 6 an. Zwischen Schutzfolie 6 und Acryloberfläche ist punktiert die organische, fluororganische oder siliziumorganische Verbindung 18 angedeutet. Die organische, fluororganische oder siliziumorganische Verbindung 18 ist auf der Schutzfolie 6 angeordnet und wird im Laufe der Zeit auf die Deckschicht 4 übertragen.

## Patentansprüche

1. Verfahren zur Erhöhung der Ritzhärte eines Körpers (2), der zumindest bereichsweise eine Oberfläche (4a) aus einem extrudierten oder coextrudierten Kunststoff (4) aufweist, wobei eine die Ritzhärte erhöhende organische, fluororganische oder siliziumorganische Verbindung (18) auf die Oberfläche (4a) des extrudierten oder koextrudierten Kunststoffs (4) aufgebracht wird, wobei die organische, fluororganische oder siliziumorganische Verbindung die Kratzfestigkeit und/oder die Ritzhärte der Oberfläche des Kunststoffs erhöht, wobei die organische, fluororganische oder siliziumorganische Verbindung (11a, 18) mittels eines flächigen Transfermediums (6, 11), auf welchem die organische, fluororganische oder siliziumorganische Verbindung (11a, 18) angeordnet ist, auf die Oberfläche (4a) des extrudierten oder koextrudierten Kunststoffs (4) aufgebracht und übertragen wird, **dadurch gekennzeichnet**, das die die Ritzhärte erhöhende organische, fluororganische oder siliziumorganische Verbindung (18) auf die Oberfläche (4a) des extrudierten oder koextrudierten Kunststoffs (4) in-Line im laufenden Extrusionsprozess aufgebracht wird.

2. Verfahren nach Anspruch 1, **dadurch gekennzeichnet, dass** das Transfermedium (6, 11) folienartig ausgebildet ist.

3. Verfahren nach Anspruch 1 oder Anspruch 2, **dadurch kennzeichnet, dass** das Transfermedium (6, 11) Papier (16) umfasst.

4. Verfahren nach Anspruch 3, **dadurch gekennzeichnet, dass** das Transfermedium (11) Papier (16) mit wenigstens einer Kunststoffschicht (15, 17) umfasst, wobei die organische, fluororganische oder siliziumorganische Verbindung (18) an oder in der Oberfläche der wenigstens einen Kunststoffschicht (17) aufgebracht ist oder in die Kunststoffschicht (15, 17) eingebracht ist.

5. Verfahren nach einem der Ansprüche 1 bis 4, **dadurch gekennzeichnet, dass** das Transfermedium (6, 11) auf die Oberfläche (4a) aufkaschiert wird.

6. Verfahren nach Anspruch 5, **dadurch gekennzeichnet, dass** das Transfermedium (6) auf der Oberfläche (4a) des Kunststoffs (4), vorzugsweise für zumindest einen weiteren Verfahrensschritt, verbleibt.

7. Verfahren nach einem der Ansprüche 1 bis 6, **dadurch gekennzeichnet, dass** die organische, fluororganische oder siliziumorganische Verbindung an der Oberfläche (4a) physikalisch und/oder (4a) chemisch bindet.

8. Verfahren nach einem der Ansprüche 1 bis 6, **dadurch gekennzeichnet, dass** das Transfermedium (6, 11) als abziehbare Schutzfolie (6) ausgebildet ist.

## Claims

1. A method for increasing the scratch hardness of a body (2), which has at least in some regions a surface (4a) comprising an extrudated or co-extrudated plastic (4), wherein an organic, fluoro-organic or silico-organic compound (18) that increases the scratch hardness is applied to the surface (4a) of the extrudated or co-extrudated plastic (4), wherein the organic, fluoro-organic or silico-organic compound (11a, 18) increases the scratch hardness and/or scratch resistance of the surface of the the plastic, wherein the organic, fluoro-organic or silico-organic compound (11a, 18) is applied to the surface (4a) of the extrudated or co-extrudated plastic (4) by means of a sheet-like transfer medium (6, 11), on which the organic, fluoro-organic or silico-organic compound (11la, 18) is disposed and transferred, **characterized in that** theorganic, fluoro-organic or silico-organic compound (18) that increases the scratch hardness is applied to the surface (4a) of the extrudated or co-extrudated plastic (4) in-line during operation of the extrusion process.

2. A method according to claim 1, **characterized in that** the transfer medium (6, 11) is formed like a film.

3. A method according to claim 1 or claim 2, **characterized in that** the transfer medium (6, 11) comprises paper (16).

4. A method according to claim 3, **characterized in that** the transfer medium (11) comprises paper (16) having at least on plastic layer (15, 17), wherein the organic, fluoro-organic or silico-organic compound (18) is applied to or in the surface of the at least one plastic layer (17) or introduced into the plastic layer (15, 17).

5. A method according to any of claims 1 to 4, **characterized in that** the transfer medium (6, 11) is laminated to the surface (4a).

6. A method according to claim 5, **characterized in that** the transfer medium (6) remains on the surface (4a) of the plastic (4), preferably at least for another procedural step.

7. A method according to any of claims 1 to 6, **characterized in that** the organic, fluoro-organic or silico-organic compound physically and/or chemically binds at the surface (4a).

8. A method according to any of claims 1 to 6, **characterized in that** the transfer medium (6, 11) is formed as a protective film (6).

## Revendications

1. Procédé d'augmentation de la dureté au rayage d'un corps (2) qui présente au moins par zones une surface (4a) en une matière plastique (4) extrudée ou coextrudée, dans lequel un composé (18) organique, organofluoré ou organosilicique augmentant la résistance au rayage est appliqué sur la surface (4a) de la matière plastique (4) extrudée ou coextrudée, dans lequel le composé organique, organofluoré ou organosilicique augmente la résistance au rayage et/ou la dureté au rayage de la surface de la matière plastique, le composé (11a, 18) organique, organofluoré ou organosilicique étant appliqué et transféré sur la surface (4a) de la matière plastique (4) extrudée ou coextrudée à l'aide d'un moyen de transfert (6, 11) sur lequel est agencé le composé (11a, 18) organique, organofluoré ou organosilicique,
**caractérisé en ce que**
le composé (18) organique, organofluoré ou organosilicique augmentant la résistance au rayage est appliqué sur la surface (4a) de la matière plastique (4) extrudée ou coextrudée en ligne au cours du processus d'extrusion.

2. Procédé selon la revendication 1, **caractérisé en ce que** le moyen de transfert (6, 11) est réalisé en forme de feuille.

3. Procédé selon la revendication 1 ou la revendication 2, **caractérisé en ce que** le moyen de transfert (6, 11) comprend du papier (16).

4. Procédé selon la revendication 3, **caractérisé en ce que** le moyen de transfert (11) comprend du papier (16) avec au moins une couche de matière plastique (15, 17), le composé (18) organique, organofluoré ou organosilicique étant appliqué sur ou dans la surface de ladite au moins une couche de matière plastique (17) ou introduit dans la couche de matière plastique (15, 17).

5. Procédé selon l'une des revendications 1 à 4, **caractérisé en ce que** le moyen de transfert (6, 11) est contrecollée sur la surface (4a).

6. Procédé selon la revendication 5, **caractérisé en ce que** le moyen de transfert (6) reste sur la surface (4a) de la matière plastique de préférence pour au moins une autre étape de procédé.

7. Procédé selon l'une des revendications 1 à 6, **caractérisé en ce que** le composé (18) organique, organofluoré ou organosilicique se lie physiquement et/ou chimiquement sur la surface (4a).

8. Procédé selon l'une des revendications 1 à 6, **caractérisé en ce que** le moyen de transfert (6, 11) est réalisé sous forme de feuille de protection (6) pelable.
